# EUROPÄISCHE PATENTSCHRIFT

(11) **EP 1 471 125 B1**
(45) Veröffentlichungstag und Bekanntmachung des Hinweises auf die Patenterteilung: **13.07.2005**
(21) Anmeldenummer: 04000452.5
(22) Anmeldetag: 12.01.2004
(51) Int. Cl.: C09J 5/02, C08J 5/12

(54) **Kunststoffschaumplatten grosser Dicke**
Thick polymeric foam sheets
Plaques de mousse épaisses

(30) Priorität: 02.04.2003 DE 10315090
(43) Veröffentlichungstag der Anmeldung: 27.10.2004
(73) Patentinhaber: Gefinex Jackon GMBH, 29416 Mechau (DE)
(72) Erfinder: Plate, Mark, Dr., 29410 Salzwedel (DE); Hallmann, Uwe, 29482 Küsten (DE)
(74) Vertreter: Kaewert, Klaus

(56) Entgegenhaltungen:
- DE-A- 3 031 036
- DATABASE WPI Section Ch, Week 199102 Derwent Publications Ltd., London, GB; Class A17, AN 1991-012456 XP002293386 & JP 02 286773 A (HITACHI KASEI POLYM) 26. November 1990 (1990-11-26)

## Beschreibung

Die Erfindung betrifft die Herstellung von Polystyrolschaumplatten großer Dicke. Nach einem älteren Vorschlag der DE 10106341 A1 werden extrudierte Polystyrolschaumplatten großer Dicke aus Platten kleiner Dicke hergestellt, die durch diffusionsoffene Klebung miteinander verbunden werden. Der ältere Vorschlag ist zunächst entstanden, weil der Extrusion besonders von kohlendioxidgeschäumten Polystyrolschaumplatten erhebliche Grenzen gesetzt sind. Die damals geltenden Grenzen sind zwischenzeitlich erheblich überschritten worden. Gleichwohl ist an dem älteren Vorschlag festgehalten worden.

Dabei hat sich gezeigt, daß die zusammengesetzten Polystyrolschaumplatten eine wesentlich bessere Wärmeisolierung als die einstückig geschäumten dicken Polystyrolschaumplatten besitzen. Wahlweise kann das genutzt werden, um geringere Plattendicken mit gleicher Wärmeisolierung anzubieten. Die geringere Plattendicke hat noch wesentliche bauliche Vorteile.

Zusätzlich haben sich erhebliche Fertigungsvorteile der zusammengesetzten Polystyrolschaumplatten gegenüber einstückig geschäumten Polystyrolschaumplatten ergeben, die aus einer geringeren notwendigen Lagerzeit resultieren. Je dicker die Platten sind, desto länger müssen die Platten lagern, um Schrumpf und Dehnung sowie ein Schüsseln der Platten auf ein zulässiges Maß zu verringern. Die Lagerzeit kann für dicke einstückige Polystyrolschaumplatten 6 Monate und mehr betragen. Das erfordert eine riesige Lagerkapazität und extreme Lagerkosten.

Die notwendige Lagerzeit der erfindungsgemäß zusammengesetzten Polystyrolschaumplatten ist nur ein Bruchteil der herkömmlich erforderlichen Lagerzeit bei gleicher Dicke.

Nach dem älteren Vorschlag wird eine Diffusionsfähigkeit zwischen mindestens zwei verbundenen Platten hergestellt, indem
a) extrudierte Ausgangsplatten verwendet werden, die spätestens unmittelbar vor der Verbindung an der Berührungsfläche durch Bearbeitung von der Extrusionshaut befreit werden und
b) entweder eine Klebung mit einem diffusionsoffenen Kleber erfolgt
c) oder nur eine teilflächige Verbindung zwischen den Platten erfolgt.

Von Vorteil sind dabei völlig plane Berührungsflächen der zu verbindenden Platten. Dazu erfolgt entweder eine Bearbeitung der Ausgangsplatten
d) an den Berührungsflächen und den gegenüberliegenden Flächen oder
e) einseitig an den Berührungsflächen und durch zusätzliche Maßnahmen, welche die sich ergebende Plattenkrümmung verhindern oder kompensieren.

Das Herstellen einer planen Oberfläche vor dem Verbinden der Platten verhindert, daß an der Verbindungsstelle Hohlräume oder Kanäle entstehen, in die Wasser eindringen kann. Das Wasser würde die Isoliereigenschaften des Dämmstoffes herabsetzen.
Wenn eine gleichmäßige Bearbeitung an beiden gegenüberliegenden Flächen der Ausgangsplatten erfolgt, wird eine Plattenkrümmung verhindert.
Die Plattenkrümmung kann bei nur einseitiger Bearbeitung der Ausgangsplatten auch durch Wärmebehandlung der nicht bearbeiteten, gegenüberliegenden Fläche ausgeglichen werden. Denkbar ist auch eine Verbindung der Ausgangsplatten mit ausreichendem Druck, der eine Krümmung aufhebt. Nach der Verbindung halten sich die einseitig bearbeiteten Ausgangsplatten insbesondere bei gleicher Dicke gegenseitig in der gewünschten ebenen Form.

Eine Plattenkrümmung läßt sich auch verhindern, indem zwei extrudierte Schaumstränge einseitig an den Berührungsflächen im Sinne des älteren Vorschlages oberflächenbearbeitet werden und anschließend, vorzugsweise sofort miteinander verbunden werden. Aufgrund ihrer Länge legen sich die Schaumstränge leicht aneinander an und kann ein ebener Verlauf der Stränge gewahrt werden.
Nach ihrer Verbindung werden die Schaumstränge zu den gewünschten Platten abgelängt.

Durch die Oberflächen-Bearbeitung werden je nach Qualität der Ausgangsplatten 1 bis 10 mm der Plattendicke entfernt.

Als Bearbeitung eignet sich zum Beispiel ein Schneiden durch Fräsen, Hobeln, Schneiden oder Sägen.

Der diffusionsoffene Kleber soll die Diffusionsfähigkeit der Platte nicht mehr als um 50% herabsetzen, vorzugsweise nicht mehr als 20% verändern. Noch weiter bevorzugt wird ein Kleber verwendet, der die Diffusionsfähigkeit der Platte gar nicht beeinträchtigt. Die Diffusionsfähigkeit der Platten läßt sich leicht messen. Danach kann der Kleber aus den am Markt verfügbaren Klebern ausgewählt werden.

Die Verwendung diffusionsoffener Kleber ist zwar an sich bekannt. So verweist zum Beispiel die DE 68911643 T2 auf diffusionsdurchlässige und eine unterbrochene Klebeschicht zwischen Textilen und zwischen Autositzen. Auf die Lösung des Problemes dicker Polystyrolschaum-Platten ist daraus jedoch kein Hinweis zu entnehmen.

Nach dem älteren Vorschlag können auch nicht diffusionsfähige oder schlecht diffusionsfähige Reaktionskleber bzw. Hot-Melt-Kleber, die sofort haften, und Kleber zugemischt werden, die erst mit der Zeit eine Klebekraft entwickeln. Die Kombination erfolgt dann vorzugsweise durch Auftrag der verschiedenen Kleber an unterschiedlichen Klebeflächen.
Mit der Kombination kann eine sehr schnelle Verbindung der Ausgangsplatten erreicht werden.
Eine schnelle Verbindung ist von Vorteil, wenn z.B. zwei Ausgangsplatten parallel zueinander und übereinander extrudiert werden, um sie nach einseitiger Oberflächenbearbeitung als Endlos-Stränge miteinander zu verbinden.

Zum Auftragen von Kleber eignen sich Klebewalzen oder Düsen, aus denen der Kleber gesprüht wird. Mit den Walzen läßt sich jede gewünschte Verteilung (sowohl hinsichtlich der flächenmäßigen Ausdehnung als auch hinsichtlich der Dicke des Auftrages) des Klebers auf die Berührungsflächen herbeiführen. Der Kleberauftrag kann dabei wie ein Farbauftrag gehandhabt werden. In dem Sinne sind anstelle der Walzen auch Auftragsplatten nach dem Vorbild von Druckplatten geeignet.

Düsen sind als Klebewerkzeug besonders für Hot-Meltkleber geeignet. In der beheizten Düse ist der Kleber bei entsprechender Erwärmung so dünnflüssig, daß er als Flüssigkeit aufgesprüht werden kann. Der Kleber kann dabei in der Form von Tröpfchen oder als Strahl gesprüht werden. Zur Erreichung eines teilflächigen Kleberauftrages können die Kleberstrahlen in Abständen voneinander und die Tröpfchen in entsprechender Streuung aufgetragen werden.
Für den Auftrag eines diffusionsoffenen Klebers ist gleichfalls ein tropfenförmiger oder streifenförmiger Auftrag geeignet. Es kann auch ein Aufstrich mittels Quast oder dergleichen erfolgen.

Die Verbindung ist oben an zwei Ausgangsplatten beschrieben. Nach dem genannten älteren Vorschlag lassen sich aber auch 3 und mehr Platten miteinander verbinden

Die Herstellung der dicken Platten aus Ausgangsplatten kleinerer Dicke hat überraschender Weise noch weitere Vorteile, denn es reduziert sich die Anzahl der zu extrudierenden Dickenformate. Z.B. lassen sich aus 60iger Platten (die Zahl bezeichnet im folgenden die Dicke in mm) eine 120iger Platte oder eine 180iger Platte oder eine 240iger Platte herstellen; aus einer 50iger Platte eine 100eter Platte, eine 150iger Platte, eine 200eter Platte oder eine 250iger Platte. In den beschriebenen Fällen ergeben sich aus einem einzigen Dickenformat durch Doppelung/Verbindung bereits drei bzw. vier weitere handelsübliche Dickenformate. Es können auch unterschiedlich dicke Platten miteinander kombiniert werden, z.B. 50iger und 60iger Platen oder 40iger und 50iger Platten.

Vorzugsweise beschränkt sich in dem Sinne des älteren Vorschlages die Herstellung auf die Verwendung 30iger bis 70iger Platten. Noch weiter bevorzugt beschränkt sich die Plattenherstellung auf die Verwendung von 40iger, 50iger und 60iger Ausgangsplatten. Bis zu der 60iger Plattendicke lassen sich zudem noch bessere Isoliereigenschaften zuverlässig erreichen. Dadurch ergibt sich an der nach dem älteren Vorschlag hergestellten Platte noch eine weitere Verbesserung.

Vorzugsweise entsteht nach dem älteren Vorschlag eine neue Platte mit emer Mmdestdicke von 70 mm.

Wahlweise werden zur Herstellung von Platten mit Stufenfalz zwei Ausgangs-Platten gedoppelt, wobei die eine Ausgangs-Platte gegenüber der anderen Ausgangs-Platte versetzt ist. Das heißt, die eine Ausgangsplatte springt an zwei Seiten zurück und an den verbleibenden anderen Seiten vor. Dadurch können die entstandenen Platten gleichfalls schließend verlegt werden, indem sich die Platte an allen Seiten mit dem Stufenfalz der angrenzenden anderen Platten überlappt.

Bei der Herstellung von Nut und Feder bzw. Herstellung von Stufenfalz mit der Dopplung ergibt sich zusätzlich eine Einsparung an Schaum, weil die herkömmliche Konfektionierung des Schaumstranges ein Ausfräsen von Nut/Feder und Stufenfalz vorsieht, verbunden mit einem entsprechend hohen Verzehr des Schaumstrangrandes.

Die nach dem älteren Vorschlag vorgesehene Herstellung kann auf verschiedene Kunststoffe Anwendung finden. Dazu gehören Polystyrol, Polyethylen, Polypropylen, Ehtylen und Propylencopolymere.

Die Erfindung hat sich die Aufgabe gestellt, den älteren Vorschlag weiterzubilden.
Nach etwa zweijähriger Entwicklung ist die Erfindung auf einen besonderen Polyurethan(PU)Kleber gemäß Anspruch 1 gekommen, der gleichzeitig ein Schmelzkleber und ein Reaktionskleber ist.

Polyurethankleber sind am Bau an sich bekannt. Beispielhaft wird auf die DE 19756930 A1 verwiesen. Der dort beschriebene Kleber ist aber nur ein reiner Reaktionskleber.
Der aus der DE 19756930 A1 bekannte Kleber ist ein diffusionsoffener Kleber, der jedoch nicht im Baubereich verwendet wird.

Die Diffusionsoffenheit ist bei Stoffen und Geweben eine wichtige Eigenschaft.
Die DE 19504017 A1 schlägt dazu vor, aus Polyurethan eine diffusionsoffene und zugleich wasserabweisende Schicht zwischen zwei Textilschichten zu erzeugen. Nach der DE 19504017 A1 soll auf dem Wege eine Baufolie für Isolierzwecke erzeugt werden, die das Eindringen von Wasser in Gebäude verhindern, gleichzeitig aber die im Bau eingeschlossene Feuchtigkeit als Dampf entweichen lassen. Der Fachmann bewertet diese Folienherstellung wie zum Beispiel die Herstellung von Polyethylenfolien. Auch, wenn die Polyurethanfolie vor dem Ausreagieren klebrig ist, wird keine dieser Folien als Klebematerial angesehen.

Dabei ist unschädlich, daß für die entstehenden Folien verklebt werden, auch mit hot-melt-Klebern.
In der US-PS 3953566 ist darüber hinaus beschrieben, wie eine ähnliche Folie mittels eines Klebstoffes auf ein Textil auflaminiert wird.
Ähnlich ist die Lösung der DE 3922028 A1, die ein Adhesivmaterial vorsehen, um die Folie mit der Textilschicht zu verbinden.

Andere Lösungen mit dergleichen Folien wie bspw. die DE 3836434 A1 schlagen vor, die Folie thermisch mittels eines Schmelzklebers auf die Textilschicht aufzukaschieren.
Die DE 3815720 A1 schlägt vor, die Folie auf der Textilschicht aufzuschweißen.

Die DE 41 21 716 A1 beschreibt gleichfalls die Herstellung einer membranartigen Folie für die Verbindung mit einem Textil. Die Folie ist als wasserabweisende, aber diffusionsoffene Schicht in mehrschichtigen Textilen vorgesehen, wie sie unter der Markenbezeichnung Goretex für Outdoor-Kleidung allgemein bekannt sind. Es heißt dort
*Nach Kenntnis der Anmelderin kann aber aus keinem im Stand der Technik beschriebenen, geschweige denn im Handel erhältlichen Schmelzkleber eine membranartige Folie auf einer Faserschicht ausgebildet werden, die für Wasserdampf durchlässig ist und den Anwendungsbedingungen des fertigen Materials gewachsen ist.*
*Es ist daher wesentliche Aufgabe der Erfindung, Schmelzklebstoffe anzugeben, die sich zur Erzeugung einer wasserdampfdurchlässigen, membranartigen Folie in situ auf einem Fasermaterial eignen, so daß die Folienkomponente des Materials nicht fertig vorgebildet werden muß,*

Zwar wird in der Beschreibungseinleitung zu der DE 41 21716 A1 auf bekannte Abdeckplanen der Bauindustrie verwiesen, die wasserundurchlässig aber dampfundurchlässig sind. Das versteht der Fachmann aber nur als Hintergrundinformation zu den Goretex-Textilien.
Auch bei der DE 4121716 A1 geht es nur um die Herstellung einer Folie. Insofern geht diese Druckschrift nicht über die anderen erläuterten Druckschriften und Folientechniken für die Textilherstellung hinaus.
Im Falle der DE 4121716 A1 wird wie in den oben erläuterten anderen Fällen eine Folie aus Polyurethan erzeugt. Es handelt sich um die gleiche Technik.

Daß die Folie auch bei dieser Lösung mit der Textilschicht verklebt wird, ist gegenüber dem Stand der Technik zur Textil-Herstellung keine Besonderheit. Von dem Stand der Technik unterscheidet sich die DE 4121716 A1 dadurch, daß das für die Folie verwendete Polyurethan zugleich ein Schmelzkleber ist. Für den Fachmann zur Herstellung von Kunststoffschaumplatten für den Bau ist die Textilherstellung kein Bereich, in dem er nach Vorlagen für seine Arbeit sucht.
Im übrigen weist die DE 4121716 A1 auf folgendes hin:
*Im Stand der Technik ist eine unübersehbare Zahl verschiedenartigster Schmelzkleber bekannt. Üblicherweise enthalten diese Polymermaterial, das im wesentlichen Kohäsionseigenschaften des Kleber bestimmt, im Gemisch mit klebrig gemachten Harzen und dgl., die im wesenthchen für die Adhäsionseigenschaften ausschlaggebend sind. Hinzu kommen üblicherweise plastifizierende Komponenten. Alle drei* genannten *Hauptbestandteile können unterschiedlichster Art sein.*
Die Auswahl eines richtigen Klebers aus so vielen angebotenen Klebern ist mehr oder weniger Zufall oder muß mit einem extremen Aufwand systematisch erfolgen, der über das einem Durchschnittsfachmann zumutbare Maß hinausgeht.

Für die Erfindung ist auch unschädlich, daß ähnliche Schmelzklebstoffe aus der DE 3827224 bekannt sind.

Hintergrund für die Auswahl eines Klebers mit Frühfestigkeit und Endfestigkeit ist die Überlegung, in einem Vorgang
einen extrudierten Kunststoffschaumstrang an den Breitseiten zu bearbeiten,
an den Breitseiten mit Kleber zu beschichten,
mit den Breitseiten und zwischenliegendem Kleber aufeinander zulegen und
zu stapeln und einem Lager zuzuführen
Bei der Handhabung müssen die übereinander liegenden Platten eine gewisse Fixierung besitzen. Die Fixierung wird durch die Frühfestigkeit des Klebers bewirkt. Ohne die Frühfestigkeit besteht die Gefahr einer unerwünschten Verschiebung der Platten.

Die Platten werden wahlweise so übereinander gelegt, daß das entstehende Produkt eine mehrschichtige Kunststoffschaumplatte mit einem Stufenfalz am Rand oder mit einer Nut-Feder-Verbindung am Rand ist.

Der Stufenfalz entsteht, wenn zwei Platten parallel zu den Breitseiten der Platten um ein Maß versetzt zueinander aufeinander gelegt werden, das der gewünschten Stufenbreite entspricht.

Die Nut-Feder-Verbindung entsteht, wenn drei Platten übereinander gelegt werden, wobei die beiden äußeren Platten deckungsgleich angeordnet sind, während die mittlere Platte parallel zu ihren Breitseiten gegenüber den äußeren Platten um ein Maß verschoben ist, das der gewünschten Feder und der gewünschten korrespondierenden Nut entspricht.

Je nach Auslegung des Klebers kann die Frühfestigkeit so groß sein, daß auch noch eine Bearbeitung der Schmalseiten an den Platten möglich ist.

Die Zeit, welche nach Aufbringen des Klebers für das Aufeinanderlegen der Platten zur Verfügung steht, wird als Offenzeit bezeichnet.
In weiterer Ausbildung der Erfindung wird der Kleber auf eine Offenzeit von wenigen Minuten eingestellt, z.B. von weniger als 30 min, vorzugsweise weniger als 15min und noch weitere bevorzugt weniger als 10 min, wahlweise von 6 Minuten. Die Zeit ist einerseits ausreichend, um die Ausgangsplatten aufeinander zu legen und zu positionieren. Andererseits ist die Zeit ausreichend kurz, damit der Kleber kurzfristig genug anzieht, um die so verbundenen Platten zu handhaben und gegebenenfalls zu bearbeiten.

Die oben beschriebene Frühfestigkeit und Handhabungsmöglichkeit erlaubt es, den genannten Extrusionsstrang auf einem Rollgang aufzunehmen. Auf dem Rollgang bewegt sich der Strang mit Extrusionsgeschwindigkeit.
Der Extrusionsstrang durchläuft mit dieser Geschwindigkeit alle nachfolgenden Bearbeitungsstationen. Wie oben ausgeführt, gehört zu den Bearbeitungsstationen z.B. eine Frässtation zur Entfernung der Extrusionshaut an dem Extrusionsstrang. Vorzugsweise wird die Extrusionshaut allseitig entfernt. Anschließend durchwandert der Strang die Trennstation. Dort werden die einzelnen Platten z.B. mit einer Säge von dem Strang abgelängt.
Dem folgt eine Klebestation und schließlich eine Stapelstation.

Der PU-Kleber ist durch dauerhafte Beständigkeit gekennzeichnet. Die Aushärtung kann nach etwa 24 Stunden abgeschlossen sein. Die Aushärtung kann auch länger dauern.

Da die extrudierten Platten zu einer gewünschten Alterung der Platten üblicherweise mehrere Tage, zum Teil mehrere Wochen oder Monate gelagert werden, ist ein langes Aushärten unschädlich.

Die Verklebung wird durch Bewitterungseinflüsse, Wasser, hohe Temperatur, Frost-Tau-Wechsel nicht beeinflußt.

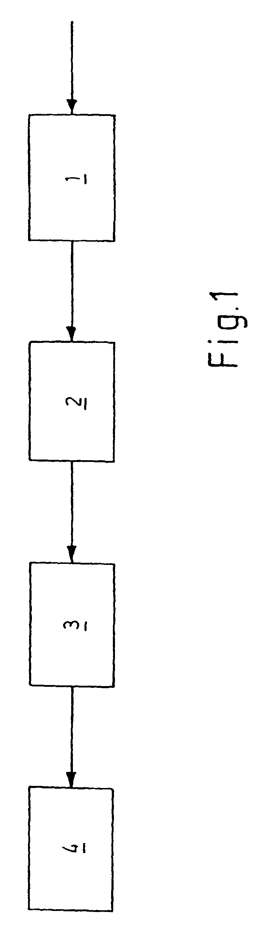

In dem Schema gemäß Fig. 1 und einer Zeichnung nach Fig. 2 sind verschiedene Ausführungsbeispiele der Erfindung beschrieben.

Ausgangsplatten für das Ausführungsbeispiel sind herkömmlich hergestellte Polystyrolschaum-Platten mit einem Raumgewicht von 30 bis 45 kg pro Kubikmeter. Dabei ist im Ausführungsbeispiel zunächst mittels einer Tandem-Extrusionsanlage ein Endlos-Schaumstrang erzeugt worden. Die Tandem-Extrusionsanlage besteht aus einem Primärextruder und einem Sekundärextruder. In dem Primärextruder wird das Kunststoffgranulat mit den üblichen verschiedenen Additiven und Verarbeitungshilfen aufgeschmolzen und zu einer homogenen Schmelze vermischt. Die entstehende Schmelze wird mit Treibmittel versetzt und das Gemisch auf dem weiteren Weg durch den Extruder weiter homogenisiert. Daran schließt sich eine Abkühlung der Schmelze auf Extrusionstemperatur im Sekundärextruder.
Im Sekundärextruder herrscht ein erheblicher Druck. Beim Austragen der Schmelze durch die Düse des Extruders findet eine Entspannung der Schmelze statt. Infolgedessen expandiert das Treibmittel und bildet in der Schmelze entsprechend seiner feinen Verteilung eine Vielzahl gleichmäßig verteilter Blasen/Zellen.

In einem anderen Ausführungsbeispiel wird anstelle einer Tandemanlage eine Extrusionsanlage mit einem einzigen Extruder eingesetzt. Es kann sich um Extruder verschiedener Bauart handelt, z.B. Einschneckenextruder oder Doppelschneckenextruder.

Die Schmelze wird in einen sogenannten Kalibrator geschäumt. Es handelt sich um Metallplatten, welche dem entstehenden Schaumstrang seine Dicke geben.
Nach ausreichender Abkühlung wird der entstehende Schaumstrang an einer Seite oder an beiden Flachseiten durch Oberflächenbearbeitung von der Extrusionshaut befreit. Das kann inline mit der Schaumherstellung oder nach Ablängen des Schaumstranges zu Platten ohne vorhergehende Oberflächenbearbeitung erfolgen. Es können auch Platten verwendet werden, die in bekannter Weise aus einem Schaumstrang abgelängt werden, der vor dem Ablängen an beiden gegenüberliegenden Flachseiten bearbeitet worden ist. Die bearbeiteten und abgelängten Platten können ohne Zwischenlagerung oder nach vorheriger Lagerung weiterverwendet werden, d.h. in erfindungsgemäßer Weise verbunden werden.

Die Oberflachenbearbeitung erfolgt im Ausführungsbeispiel mittels Fräsen. In anderen Ausführungsbeispielen kann eine andere Oberflächenbearbeitung Anwendung finden.

Die Oberflachenbearbeitung nur einer Flachseite und inline findet vorzugsweise Anwendung, wenn parallel ein gleicher Schaumstrang hergestellt und an der Oberfläche bearbeitet wird, so daß diese Schaumstränge miteinander verbunden werden können.

Im Ausführungsbeispiel werden Platten, die in der oben beschriebenen bekannten Weise bearbeitet und zwischengelagert worden sind, in einer Station 1 nebeneinander und hintereinander auf einen Rollgang (bestehend aus hintereinander angeordneten Rollen) gelegt, so daß sie zwei nebeneinander und aneinander liegende Plattenstränge bilden. Diese Plattenstränge werden auf dem Rollgang in eine Station 2 geschoben. Dort wird einer der Stränge an der Verbindungsfläche der Ausgangsplatten von oben mit einem Hot-Melt-Kleber mit PU-Anteil besprüht. In anderen Ausführungsbeispielen werden beide Stränge mit dem Kleber besprüht.
Der Kleber besitzt nach erfindungsgemäßer Verbindung der Ausgangsplatten eine ausreichende Diffusionsdurchlässigkeit für Wasserdampf.
Bei dem diffusionsoffenen Kleber kann die Plattenoberfläche mit einer mehr oder weniger geschlossenen Kleberschicht überzogen werden.

Im ersten beschriebenen Ausführungsbeispiel gelangen die Ausgangsplatten nach dem Kleberauftrag in eine Station 3, in der die Ausgangsplatten auf dem Rollgang aufgerichtet und gegeneinander gedruckt werden. Zugleich findet eine Zentrierung der Ausgangsplatten aufeinander bzw. ein gewünschter Versatz der Ausgangsplatten gegeneinander statt.

In einer Station 4 werden die entstandenen neuen Platten abgelegt bzw. gestapelt.

In einem weiteren nicht dargestellten Ausführungsbeispiel wird ein einziger Strang aus hintereinander liegenden Ausgangsplatten auf einem Rollgang oder einem Transportband erzeugt und mit Kleberauftrag versehen. Die zu verbindenden weiteren Ausgangsplatten werden von Hand oder maschinell von einem Stapel genommen und auf den auf dem Rollgang oder dem Transportband liegenden Ausgangsplatten positioniert.

Die nach Ablängen der XPS-Stränge entstandenen Platten besitzen an den Schnittflächen keine Verbindungselemente. In einem anderen Ausführungsbeispiel werden in einem zusätzlichen Arbeitsschritt dort weitere Verbindungselemente gesetzt.

## Patentansprüche

1. Verfahren zur Verbindung von mindestens zwei Ausgangsplatten aus Kunststoffschaum zu einer neuen Platte, insbesondere von alternativ bzw. HFCKW-frei getriebenen Polystyrolschaumplatten als Ausgangsplatten zu neuen Platten mit einer Mindestdicke von 70 mm, wobei
a) Ausgangsplatten verwendet werden, die zumindest an der Berührungsfläche extrusionshautlos sind und
b) eine Verbindung der Ausgangsplatten mit einem diffusionsoffenen Kleber erfolgt, wobei ein Hot-Melt-Kleber und/oder ein Reaktionskleber verwendet wird
**dadurch gekennzeichnet,**
**daß** der Kleber
c) aus Isocyanat und mindestens einer weiteren Reaktionsgruppe besteht,
wobei eine Reaktionsgruppe ein Harz ist, das im schmelzflüssigen Zustand klebrig ist und der Klebeverbindung beim Erkalten eine Frühfestigkeit gibt, und wobei das Harz zumindest zusammen mit dem Isocyanat zu Polyurethan reagiert, das der Klebeverbindung die Endfestigkeit gibt,
und **daß**
d) der Kleber mit einer Menge von 40 bis 150 Gramm pro Quadratmeter, vorzugsweise mit einer Menge von 80 bis 110 Gramm pro Quadratmeter auf die Klebefläche aufgetragen wird.

2. Verfahren nach Anspruch 1, **dadurch gekennzeichnet, daß** der Kleber in höchstens 10 Tagen ausreagiert, vorzugsweise in höchstens 5 Tagen ausreagiert, noch weiter bevorzugt in höchstens 2 Tagen ausreagiert.

3. Verfahren nach Anspruch 1 oder 2, **dadurch gekennzeichnet, daß** der Kleber eine Offenzeit von weniger als 30min, vorzugsweise weniger als 15 min und noch weiter bevorzugt weniger als 10min hat.

4. Verfahren nach einem der Ansprüche 1 bis 3, **dadurch gekennzeichnet, daß** die Platten so miteinander verklebt werden, daß ein Stufenfalz oder eine Nut-Feder-Verbindung entsteht.

5. Verfahren nach einem der Ansprüche 1 bis 4, **dadurch gekennzeichnet, daß** die miteinander verklebten Platten gemeinsam an den Schmalseiten bearbeitet werden.

## Claims

1. Process for joining at least two starting materials consisting of boards of foamed plastic to make one new board, in particular for starting materials consisting of polystyrene foamed boards made with an alternative blowing agent or a HCFC-free (hydrochlorofluorocarbon-free) blowing agent, to produce new boards with a minimum thickness of 70 mm, wherein
a) starting material boards are used that do not have an extrusion skin at least on their contact surfaces, and
b) the starting material boards are joined together with a permeable adhesive, a hot melt adhesive and/or a reactive adhesive being used
**characterised in that**,
the adhesive
c) consists of isocyanate and at least one further reactive group, wherein one reactive group is a resin that in its liquid melt form is sticky and which on cooling provides an initial strength to the adhesive joint, and wherein the resin reacts at least with the isocyanate to form a polyurethane that provides the final strength to the adhesive joint,
and that
d) the adhesive is applied on the adhering surface in a quantity of 40 to 150 grams per square metre, preferably in a quantity of 80 to 110 grams per square metre.

2. Process according to Claim 1, **characterised in that** the adhesive fully reacts within 10 days at the most, preferably within 5 days at the most, even more preferably within 2 days at the most.

3. Process according to Claim 1 or 2, **characterised in that** the adhesive has an open time of less than 30 minutes, preferably less than 15 minutes and even more preferably less than 10 minutes.

4. Process according to one of Claims 1 to 3, **characterised in that** the boards adhere to each other In such a way that a protruding edge or a tongue and groove joint results.

5. Process according to one of Claims 1 to 4, **characterised in that** the adhesively joined boards are machined together on the narnow sides.

## Revendications

1. Procédé pour assembler au moins deux plaques de départ en mousse plastique, pour obtenir une nouvelle plaque, en particulier des plaques en mousse de polystyrène expansé par un agent porogène alternatif ou exempt d'hydrocarbure fluorochloré, servant de plaques de départ, pour obtenir de nouvelles plaques ayant une épaisseur minimale de 70 mm, procédé dans lequel
a) on utilise des plaques de départ qui au moins sur la surface de contact ne comportent pas de peau d'extrusion, et
b) on réalise un assemblage des plaques de départ avec un adhésif ouvert à la diffusion, auquel cas on utilise un adhésif fusible et/ou un adhésif à deux composants,
**caractérisé en ce que**
l'adhésif
c) est constitué d'isocyanate et d'au moins un autre groupe réactif, un groupe réactif étant une résine qui à l'état fondu est poisseuse, et qui confère à l'assemblage collé, après refroidissement, une résistance initiale, la résine réagissant au moins en même tant que l'isocyanate pour obtenir un polyuréthanne qui va conférer la résistance finale à l'assemblage collé,
et **en ce que**
d) l'adhésif est appliqué sur la surface à coller en une quantité de 40 à 150 grammes par mètre carré et de préférence en une quantité de 80 à 110 grammes par mètre carré.

2. Procédé selon la revendication 1, **caractérisé en ce que** l'adhésif réagit complètement en au plus 10 jours, de préférence en au plus 5 jours, et plus particulièrement en au plus 2 jours.

3. Procédé selon la revendication 1 ou 2, **caractérisé en ce que** l'adhésif présente un temps ouvert inférieur à 30 minutes, de préférence inférieur à 15 minutes et plus particulièrement inférieur à 10 minutes.

4. Procédé selon l'une des revendications 1 à 3, **caractérisé en ce que** les plaques sont collées l'une à l'autre de façon qu'il se forme un assemblage par plaques lisses imbriquées ou un assemblage par tenon et mortaise.

5. Procédé selon l'une des revendications 1 à 4, **caractérisé en ce que** les plaques collées l'une à l'autre sont usinées simultanément sur leurs petits côtés.
